(19) Europäisches Patentamt

European Patent Office

Office européen des brevets

(11) **EP 1 111 365 B1**

(12) **EUROPEAN PATENT SPECIFICATION**

(45) Date of publication and mention
of the grant of the patent:
**16.08.2006 Bulletin 2006/33**

(51) Int Cl.:
**G01N 1/34** *(2006.01)*  **G01N 1/22** *(2006.01)*
**G01N 1/00** *(2006.01)*

(21) Application number: **00311381.8**

(22) Date of filing: **19.12.2000**

(54) **Sampling method using a cap with a helical gas passage.**

Verfahren zur Probenentnahme unter Verwendung von einem Deckel mit einem spiralenförmigen Gasdurchlass

Procédé d'échantillonnage utilisant un bouchon avec un passage de gaz ayent une forme hélicoïdale

(84) Designated Contracting States:
**AT BE CH CY DE DK ES FI FR GR IE IT LI LU MC NL PT SE TR**

(30) Priority: **22.12.1999 GB 9930125**
**10.02.2000 US 501821**

(43) Date of publication of application:
**27.06.2001 Bulletin 2001/26**

(73) Proprietor: **Markes International Limited Pontyclun,**
**Mid Glamorgan CF72 8YW (GB)**

(72) Inventors:
• **Woolfenden, Elizabeth Angela**
**Bridgend, CF35 6EL (GB)**
• **Cole, Alun**
**Bridgend, CF35 6EL (GB)**

(74) Representative: **Gibson, Stewart Harry**
**Urquhart-Dykes & Lord LLP**
**Three Trinity Court,**
**21-27 Newport Road**
**Cardiff CF24 0AA (GB)**

(56) References cited:
EP-A- 0 453 434          GB-A- 875 065
GB-A- 2 337 513          US-A- 4 389 372

• **COLE A ET AL: "GAS EXTRACTION TECHNIQUES FOR SAMPLE PREPARATION IN GAS CHROMATOGRAPHY" LC-GC INTERNATIONAL (LIQUID AND GAS CHROMOTOGRAPHY), EUGENE, OR, US, vol. 5, no. 3, 1992, pages 8,12,14-15, XP000253567**

**Description**

The present invention relates to a method of analysing a sample held within a sampling device.

It is known to provide a sampling device in the form of a tube containing an adsorbing material. One end of the tube is normally closed by a tightly-fitting cap which is temporarily removed to sample the ambient atmosphere at a test location, and then replaced to prevent subsequent contamination of the sample.

Later, at an analysis site, the tightly-fitting cap is once again removed from the tube and is replaced by a more loosely-fitting cap. The sampling device is then loaded into a hopper for processing by an analytical instrument.

The loosely-fitting cap, whilst providing a worse seal than the tightly-fitting cap, is necessary to allow the cap to be removed by an automatic mechanism within the analytical instrument so that the contents of the sampling device may be analysed.

With the loosely-fitting cap removed, the contents of the sampling device are analysed by heating the adsorbing material to release therefrom any volatile organic compounds (VOCs) that may have been adsorbed during the sampling period, the desorbed VOCs being driven from the tube and into the analytical instrument by a flow of inert gas.

However, the process described above has a number of serious drawbacks. Firstly, the manual removal of the tightly-fitting cap is both difficult and time consuming. Secondly, as mentioned above, the loosely-fitting cap provides a poor seal which may allow a sample to become contaminated. Thirdly, the provision of an automatic cap-removal mechanism significantly increases the cost and complexity of the analytical instrument.

In order to overcome these drawbacks, it has been proposed to provide a tightly-fitting end cap formed with a reduced-diameter bore, the dimensions of the bore being chosen to limit the rate of diffusion of gases into or out of the tube, but, at the same time, to allow desorbed VOCs to be driven out of the capped tube for analysis.

The tightly-fitting cap, once fitted to a sampling device at a test site, need not be replaced or removed for subsequent analysis of the contents of the device.

Two major factors govern the optimum dimensions of the bore.

Firstly, the uptake of VOCs by the adsorbing material is governed by Fick's Law, which states that the rate of uptake Q of a particular VOC is proportional to the cross sectional area A of the bore, and is also inversely proportional to length of the bore, more particularly -

$$Q = \frac{DA}{L}t$$

Where Q is the uptake quantity, D is the diffusion constant for a particular VOC, t is the duration of exposure, A is the cross-sectional area of the bore and L is the diffusion length.

Thus the rate of uptake may be controlled by varying either the diameter or the length of the bore.

However, there is a practical limit on the minimum diameter of the bore, which is determined by the maximum acceptable pressure difference p between the ends of the bore as inert gas is driven through the bore during analysis.

The pressure difference p between the ends of the bore is governed by Poiseuille's equation which states that the pressure difference p is proportional to the length of the bore L and to volume of gas flow V through the bore, and is also inversely proportional to the radius of the bore raised to the power 4, more specifically -

$$V = \frac{r^4 \pi}{L 8 \eta} p$$

Where V is the volume of gas passing through the bore, r is the radius of the bore, L is the length of the bore, p is the pressure difference between the ends of the bore and n is the coefficient of viscosity of the gas.

So as not to exceed a maximum acceptable pressure drop, the minimum diameter of the bore must therefore be limited. Once this limit has been reached, any further reduction in the rate of uptake of VOCs can only be achieved by increasing the length of the bore.

To provide the low rates of uptake required in most modern sampling applications, whilst maintaining a preferred pressure drop of around 6.89Kpa (1 psi) for gas flows of up to 100ml/min, a bore length far exceeding that of a standard end cap is typically required.

In order to provide a sufficiently long bore within the dimensional confines a standard sized cap, it has hitherto been necessary to provide a cap in the form of a hollow body containing a coiled length of tube.

However, we have found such caps to be extremely difficult and therefore costly to manufacture.

EP0453434 describes a venting device for containers. GB875065 describes a stopper for bottles or jars. GB 2337513 describes a sample tube cap, and a method of analysing a sample using the cap provided with a passage for gases.

We have now devised an arrangement which overcomes the limitations of existing sampling devices.

According to a first aspect of the present invention, there is provided the method defined in claim 1.

Preferably, the sampling device is fitted with a second cap comprising a sleeve and a cylindrical insert, one or other of the opposed surfaces of the sleeve and the insert of the second cap being formed with at least one helical channel such that, when the insert is fitted into the sleeve, the or each helical channel forms a respective passage through which gases may pass, the flow of gas being introduced into the device through the passage or passages formed in the second cap, to drive the sample out of the device through the passage or passages formed in the first cap.

According to a second aspect of the present invention, there is provided the method defined in claim 3.

Preferably, the device comprises a second opening fitted with a cylindrical insert, the flow of gas being introduced into the device through at least one passage formed by a respective helical channel formed in one or other of the opposed surfaces of the second opening and its respective insert to drive the sample out of the device through said at least one passage formed by a respective helical channel formed in one or other of the opposed surfaces of the first tubular opening and its respective insert.

Embodiments of the present invention will now be described by way of examples only and with reference to the accompanying drawings, in which:

Figure 1 is a side view of a sampling device fitted with a pair of prior art diffusion-limiting end-caps;
Figure 2 is a side view of an end-cap;
Figure 3 is a side view of an end-cap; and
Figure 4 is a section through a portion of the channelled surface of the insert of Figure 2.

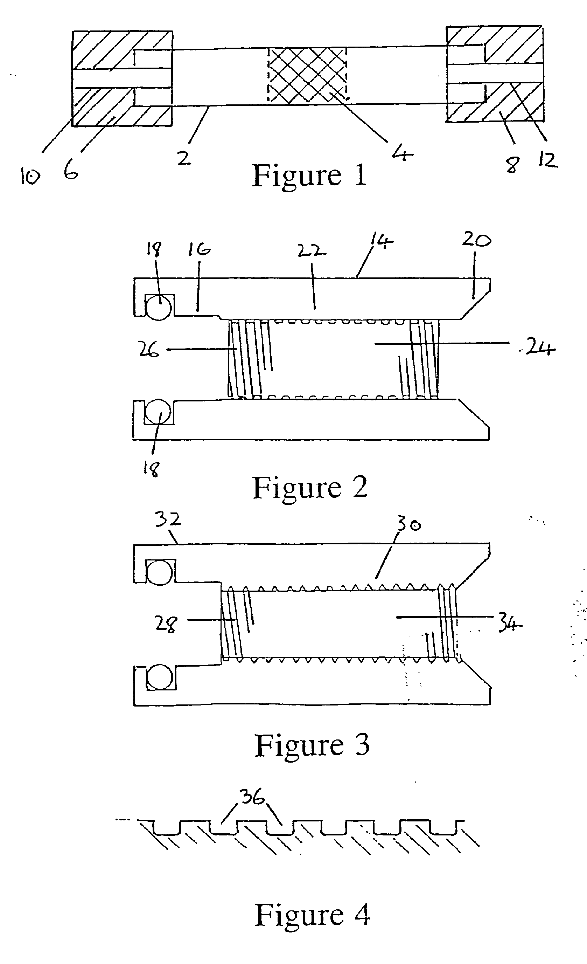

Referring to Figure 1, a sampling device is shown comprising an elongate sampling tube 2 containing an adsorbent material 4.

The opposite ends of the tube are fitted with respective prior art end-caps 6, 8, each cap being formed with a respective passage 10,12 therethrough to allow limited diffusion of gases into or out of the tube 2.

To obtain an atmospheric sample, the end-caps 6, 8 are removed and the device left at a test location for a predetermined period of time. During this time, gases enter the device, with the adsorbent material 4 retaining any volatile organic compounds (VOCs) present in the gases. The end-caps 6, 8 are subsequently re-fitted to the tube 2 which is then transported to a second location for analysis.

To analyse the sample, one end of the device is connected to an analytical instrument and the other end of the device is connected to a source of inert gas. The tube 2 is heated to release, from the adsorbing material 4, any VOCs that may have been adsorbed during the test period, with the released VOCs being driven into the analytical instrument by the flow of inert gas through the tube.

The small diameter of the passages 10,12 formed by the channelling in the end-caps 6,8 limits the uptake of any contaminants whilst the device awaits processing. Thus the ends of the device need not be sealed between the sampling and subsequent analysis operations.

As explained above, to limit the rate of uptake of VOCs by the device to the extent required in many modern sampling applications, it is necessary to provide a very long passage in the each of the end caps. This object may be achieved according to the present invention in one of two ways.

Firstly, a cap of the type shown in Figure 2 may be fitted to one or both ends of a sampling tube. The cap of Figure 2 comprises a sleeve 14 having an end portion 16 of increased internal diameter and fitted with an O-ring seal 18 for securing the cap to the open end of a sampling tube. The opposite end of the sleeve 14 has a tapered entrance portion 20 for attachment to an analytical instrument.

An intermediate portion 22 of the sleeve 14 is fitted with a cylindrical insert 24, the surface of the insert being formed with a helical channel 26 along its length. In use, the helical channel 26 in the or each cap forms a passageway for communicating gases between the interior and the exterior of the tube to which it is fitted.

Alternatively, a cap of the type shown in Figure 3 may be fitted to one or both ends of a sampling tube. The cap of Figure 3 differs from that of Figure 2 in that a helical channel 28 is formed along an interior surface portion 30 of the sleeve 32 rather than along the surface of the insert 34. It will be appreciated that the rate of uptake of VOCs into a tube to which either cap is fitted is determined by the cross-sectional profile, pitch and number of the or each helical channels formed in the sleeve or in the insert of the cap, and by the length of the insert, the latter being readily varied by trimming the insert to an appropriate length.

A preferred rectangular channel profile is shown in Figure 4, in which successive turns 36 of the channel are spaced apart to minimise leakage between those turns.

The channel formed in the sleeve or in the insert of a cap is preferably cut respectively using an appropriately formed tap or die.

Caps may be supplied without channels, allowing the purchaser to form one or more channels in the tubular part or in the insert to his own requirements.

Caps may instead be supplied together with an assortment of interchangeable inserts each having a different length, cross-sectional channel profile, channel pitch and or number of channels.

It would also remain in accordance with the present invention for inserts to be fitted directly into the opposite ends of a sample tube.

The arrangements thus described provide a convenient means for obtaining and processing atmospheric samples.

## Claims

1. A method of analysing a sample held within a sampling device (2), the method comprising the steps of

providing a cap comprising a sleeve (14) and a cylindrical insert (24), one or other of the opposed surfaces of the sleeve (14) and the insert (24) being formed with at least one helical channel (26, 28) such that, when the insert (24) is fitted into the sleeve (14), the or each helical channel (26,28) forms a respective passage through which gases may pass;

fitting the cap to the sampling device (2) following a sampling period;

and offering the device (2) to an analytical instrument which provides a flow of gas through the sampling device to drive the sample out of the device (2) through the cap.

2. A method as claimed in Claim 1, wherein the sampling device (2) is fitted with a second cap comprising a sleeve (14) and a cylindrical insert (24), one or other of the opposed surfaces of the sleeve (14) and the insert (24) of the second cap being formed with at least one helical channel (26,28) such that, when the insert (24) is fitted into the sleeve (14), the or each helical channel (26,28) forms a respective passage through which gases may pass, the flow of gas being introduced into the device (2) through the passage or passages formed in the second cap, to drive the sample out of the device (2) through the passage or passages formed in the first cap.

3. A method of analysing a sample held within a sampling device (2) having a tubular opening, the method comprising the steps of fitting a cylindrical insert (24) into the opening following a sampling period, and offering the sampling device (2) to an analytical instrument which provides a flow of gas through the sampling device to drive the sample out of the device (2) through at least one passage formed by a respective helical channel (26,28) formed in one or other of the opposed surfaces of the tubular opening and the insert (24).

4. A method as claimed in Claim 3, wherein the device (2) comprises a second opening fitted with a cylindrical insert (24), the flow of gas being introduced into the device (2) through at least one passage formed by a respective helical channel (26,28) formed in one or other of the opposed surfaces of the second opening and its respective insert (24) to drive the sample out of the device (22) through said at least one passage formed by a respective helical channel (26,28) formed in one or other of the opposed surfaces of the first tubular opening and its respective insert 24.

## Patentansprüche

1. Verfahren zum Analysieren einer in einem Probennehmer (2) gehaltenen Probe, mit folgenden Verfahrensschritten:

Bereithalten einer Kappe, die eine Hülse (14) und einen zylindrischen Einsatz (24) aufweist, wobei die eine oder die andere der einander gegenüber liegenden Flächen der Hülse (14) und des Einsatzes (24) mit mindestens einem spiralförmigen Kanal (26, 28) derart versehen ist, dass, wenn der Einsatz (24) in die Hülse (14) eingesetzt wird, der oder jeder spiralförmige Kanal (26, 28) eine entsprechende Passage bildet, durch die Gase strömen können;

Aufsetzen der Kappe auf den Probennehmer (2) nach einer Probennahme; und Heranführen des Probennehmers (2) an ein Analyseinstrument, das für einen Gasstrom durch den Probennehmer sorgt, um die Probe aus den Probennehmer durch die Kappe auszutreiben.

2. Verfahren nach Anspruch 1, **dadurch gekennzeichnet, dass** der Probennehmer (2) mit einer zweiten Kappe versehen ist, die eine Hülse (14) und einen zylindrischen Einsatz (24) aufweist, dass die eine oder die andere der einander gegenüber liegenden Flächen der Hülse (14) und des Einsatzes (24) der zweiten Kappe mit mindestens einem spiralförmigen Kanal (26, 28) derart versehen ist, dass wenn der Einsatz (24) in die Hülse (14) eingesetzt wird, der oder jeder spiralförmige Kanal (26, 28) eine entsprechende Passage bildet, durch die Gase strömen können, und dass der Gasstrom in den Probennehmer (2) durch die Passage oder die Passagen der zweiten Kappe eingeführt wird, um die Probe aus dem Probennehmer (2) durch die in der ersten Kappe gebildeten Passage oder Passagen auszutreiben.

3. Verfahren zum Analysieren einer in einem Probennehmer (2) mit rohrförmiger Öffnung gehaltenen Probe, mit folgenden Verfahrensschritten:

Einsetzen eines zylindrischen Einsatzes (24) in die Öffnung nach einer Probennahme; und Heranführen des Probennehmers (2) an ein Analyseinstrument, das für einen Gasstrom durch den Probennehmer sorgt, um die Probe aus dem Probennehmer (2) durch mindestens eine Passage auszutreiben, die durch einen entsprechenden spiralförmigen Kanal (26, 28) in der einen oder der anderen der einander gegenüberliegenden Oberflächen der rohrförmigen Öffnung und des Einsatzes (24) gebildet wird.

4. Verfahren nach Anspruch 3, **dadurch gekennzeichnet, dass** der Probennehmer (2) eine zweite Öffnung aufweist, in die ein zylindrischer Einsatz (24) eingesetzt ist, dass der Gasfluss in den Probennehmer (2) durch mindestens eine Passage eingeführt wird, die durch einen entsprechenden spiralförmigen Kanal (26, 28) in der einen oder der anderen der einander gegenüberliegenden Oberflächen der zweiten Öffnung und ihrem entsprechenden Einsatz (24) gebildet wird, um die Probe aus dem Probennehmer (2) durch die mindestens eine Passage auszutreiben, die durch einen entsprechenden spiralförmigen Kanal (26, 28) in der einen oder der anderen der einander gegenüberliegenden Oberflächen der ersten rohrförmigen Öffnung und ihrem entsprechenden Einsatz (24) gebildet wird.

**Revendications**

1. Procédé d'analyse d'un échantillon contenu à l'intérieur d'un dispositif d'échantillonnage (2), le procédé comprenant les étapes consistant à :

prévoir un bouchon comprenant un manchon (14) et un insert cylindrique (24), l'une ou l'autre des surfaces opposées du manchon (14) et de l'insert (24) étant formée avec au moins un canal hélicoïdal (26, 28) de telle sorte que, lorsque l'insert (24) est emboîté dans le manchon (14), le ou chaque canal hélicoïdal (26, 28) forme un passage respectif à travers lequel des gaz peuvent passer ;
emboîter le bouchon sur le dispositif d'échantillonnage (2) suite à une période d'échantillonnage ;
et présenter le dispositif (2) à un instrument analytique qui fournit un écoulement de gaz à travers le dispositif d'échantillonnage afin d'entraîner l'échantillon hors du dispositif (2) à travers le bouchon.

2. Procédé selon la revendication 1, dans lequel le dispositif d'échantillonnage (2) est équipé d'un second bouchon comprenant un manchon (14) et un insert cylindrique (24), l'une ou l'autre des surfaces opposées du manchon (14) et de l'insert (24) du second bouchon étant formée avec au moins un canal hélicoïdal (26, 28) de telle sorte que, lorsque l'insert (24) est emboîté dans le manchon (14), le ou chaque canal hélicoïdal (26, 28) forme un passage respectif à travers lequel des gaz peuvent passer, l'écoulement de gaz étant introduit dans le dispositif (2) à travers le passage ou les passages formés dans le second bouchon, afin d'entraîner l'échantillon hors du dispositif (2) à travers le passage ou les passages formés dans le premier bouchon.

3. Procédé d'analyse d'un échantillon contenu à l'intérieur d'un dispositif d'échantillonnage (2) ayant une ouverture tubulaire, le procédé comprenant les étapes consistant à emboîter un insert cylindrique (24) dans l'ouverture suite à une période d'échantillonnage, et à présenter le dispositif d'échantillonnage (2) à un instrument analytique qui fournit un écoulement de gaz à travers le dispositif d'échantillonnage afin d'entraîner l'échantillon hors du dispositif (2) à travers au moins passage formé par un canal hélicoïdal respectif (26, 28) formé dans l'une ou l'autre des surfaces opposées de l'ouverture tubulaire et de l'insert (24).

4. Procédé selon la revendication 3, dans lequel le dispositif (2) comprend une seconde ouverture équipée d'un insert cylindrique (24), l'écoulement de gaz étant introduit dans le dispositif (2) à travers au moins un passage formé par un canal hélicoïdal respectif (26, 28) formé dans l'une ou l'autre des surfaces opposées de la seconde ouverture et de son insert respectif (24) afin d'entraîner l'échantillon hors du dispositif (2) à travers ledit au moins un passage formé par un canal hélicoïdal respectif (26, 28) formé dans l'une ou l'autre des surfaces opposées de la première ouverture tubulaire et de son insert respectif (24).

Figure 1

Figure 2

Figure 3

Figure 4